(19) Europäisches Patentamt
European Patent Office
Office européen des brevets

(11) EP 4 585 650 A1

(12) **EUROPEAN PATENT APPLICATION**
published in accordance with Art. 153(4) EPC

(43) Date of publication:
**16.07.2025 Bulletin 2025/29**

(21) Application number: **23862979.4**

(22) Date of filing: **28.08.2023**

(51) International Patent Classification (IPC):
***C08L 83/07*** *(2006.01)* ***C08K 3/013*** *(2018.01)*
***C08L 83/05*** *(2006.01)*

(52) Cooperative Patent Classification (CPC):
**C08K 3/013; C08L 83/04**

(86) International application number:
**PCT/JP2023/030853**

(87) International publication number:
**WO 2024/053440 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.09.2022 JP 2022140815**

(71) Applicant: **SHIN-ETSU CHEMICAL CO., LTD.**
**Tokyo 1000005 (JP)**

(72) Inventors:
- **HIRONAKA, Yuya**
  **Annaka-shi, Gunma 379-0224 (JP)**
- **ENDO, Akihiro**
  **Annaka-shi, Gunma 379-0224 (JP)**

(74) Representative: **Schicker, Silvia**
**Wuesthoff & Wuesthoff**
**Patentanwälte und Rechtsanwalt PartG mbB**
**Schweigerstraße 2**
**81541 München (DE)**

# (54) THERMALLY CONDUCTIVE MILLABLE SILICONE RUBBER COMPOSITION AND THERMALLY CONDUCTIVE SHEET

(57) The present invention is a thermal conductive millable-type silicone rubber composition including: (A) (A-1) a gum-like organopolysiloxane with alkenyl groups only at both chain terminals, (A-2) a gum-like organopolysiloxane with alkenyl groups at both terminals and in a side chain, and (A-3) a liquid organopolysiloxane with two or more alkenyl groups per molecule; (B) (B-1) an organohydrogenpolysiloxane with two to five hydrosilyl groups only in a side chain per molecule and (B-2) an organohydrogenpolysiloxane with two or more hydrosilyl groups per molecule, having two of the hydrosilyl groups at a chain terminal; (C) a thermal conductive filler; (E) an addition reaction catalyst; and (F) an addition reaction controlling agent. This provides a thermal conductive millable-type silicone rubber composition that yields a heat-dissipating sheet having excellent thermal conductivity, strength, and insurability, appropriate hardness, reduced contact thermal resistance, and excellent long-term stability.



Processed by Luminess, 75001 PARIS (FR)

## Description

### TECHNICAL FIELD

The present invention relates to a thermal conductive millable-type silicone rubber composition and a thermal conductive sheet.

### BACKGROUND ART

Heat-generating components and integrated circuit elements used in electronic devices may deteriorate properties and shorten a lifetime of the element due to heat generation. Arrangement of the components is important to smoothly dissipate the heat in the electronic devices. In addition, the heat-generating component or an entirety of the device is forcedly air- cooled with a cooling fin, or the heat generated in the integrated circuit elements is released outside the elements via a heat-dissipating sheet.

However, electronic devices excellence in potability represented by smartphones and tablet terminals have been particularly highly integrated in recent years, and an amount of heat generation of the heat-generating components and the integrated circuit elements in the device have increased. Thus, the conventional cooling means may be insufficient for cooling or heat-dissipating these components or elements. Specifically, a cooling method other than the forced air-cooling is required in order not to impair the potability of these electronic devices. Since a material having poor thermal conductivity is used for a printed board on which the elements are formed, the conventional heat-dissipating sheet cannot sufficiently release the heat generated in the elements toward the board. Accordingly, adopted is a method in which a naturally-cooling type or forcedly-cooling type heat dissipater such as a heat-dissipating fin or a heat pipe is provided near the element, and the heat generated in the element is conducted to the heat dissipater via a heat-dissipating medium for dissipating heat.

As the heat-dissipating medium in this method, a heat-dissipating sheet with about 0.2 to 10.0 mm in thickness is used in order to provide good thermal conductivity between the element and the heat dissipater. As the heat-dissipating sheet, a highly filled and highly hard silicone rubber layer reinforced with a fabric reinforcing material such as glass cloth is well known (Patent Document 1). This type of the heat-dissipating sheet has high hardness of the rubber layer and serves thermal conduction, and also plays a role of achieving insulability, which is extremely appreciated. However, the insulative heat-dissipating sheet needs to be hard to prevent deterioration of the insulability due to change in thickness by a pressure in mounting, and thus, there has been a problem of deteriorated adhesiveness to the electronic components or the heat dissipater to increase contact thermal resistance.

To reduce the contact thermal resistance, proposed is a heat-dissipating sheet in which a low-hardness thermal conductive silicone rubber layer is laminated to the high-hardness thermal conductive silicon rubber sheet reinforced with a reinforcing material as noted above (Patent Document 2). This composite heat-dissipating sheet, however, causes compressive deformation of the low-hardness layer due to a pressure, and the insulability may be deteriorated due to reduction in the film thickness or cracking or braking of the low-hardness layer.

In addition, a thermal conductive silicone composite sheet in which a thermal conductive silicone cured product is laminated to both surfaces of metal foil is proposed in order to achieve both excellent strength and high thermal conductivity (Patent Documents 3 and 4).

### CITATION LIST

### PATENT LITERATURE

Patent Document 1: JP 2015-233104 A
Patent Document 2: JP 2014-193598 A
Patent Document 3: JP 2013-095023 A
Patent Document 4: JP 2017-092322 A

### SUMMARY OF INVENTION

### TECHNICAL PROBLEM

As above, the high-hardness heat-dissipating sheet has excellent insulation reliability in addition to heat-dissipating properties due to its strength, but it has a problem of failure to obtain efficient thermal conductivity due to high contact thermal resistance. As for the low-hardness/high-hardness composite sheet, it is difficult to assure the

insulation due to thinning of the sheet under a high pressure. The method of laminating a metal thin film such as metal foil applied for the silicone rubber sheet has problems of increase in the contact thermal resistance, concern about insulation failure, and increase in a production cost.

The present invention has been made to solve the above problems. An object of the present invention is to provide a thermal conductive millable-type silicone rubber composition that yields a heat-dissipating sheet having excellent thermal conductivity, strength, and insurability, having appropriate hardness, and having reduced contact thermal resistance and excellent long-term stability.

SOLUTION TO PROBLEM

To solve the above problem, the present invention provides a thermal conductive millable-type silicone rubber composition including:

(A) a linear organopolysiloxane having an alkenyl group and including following components (A-1) to (A-3) in 100 parts by mass;

(A-1) a gum-like organopolysiloxane having alkenyl groups only at both terminals of a molecular chain,
(A-2) a gum-like organopolysiloxane having alkenyl groups at both terminals of a molecular chain and in a side chain, and
(A-3) an organopolysiloxane having two or more alkenyl groups in one molecule and being liquid at 25°C;

(B) an organohydrogenpolysiloxane including following components (B-1) and (B-2);

(B-1) an organohydrogenpolysiloxane having a hydrosilyl group only in a side chain of a molecular chain and having two to five hydrosilyl groups in one molecule, and
(B-2) an organohydrogenpolysiloxane having two or more hydrosilyl groups in one molecule, and having two of the hydrosilyl groups at a terminal of a molecular chain,

wherein the component (B) is contained at an amount such that a total amount of the hydrosilyl groups in the component (B) is 0.5 to 4.0 mol relative to 1 mol of a total amount of the alkenyl groups in the component (A),
(C) a thermal conductive filler in 150 to 2,400 parts by mass;
(E) an addition reaction catalyst at an amount of 0.01 to 1,000 ppm in terms of mass of platinum-group metal atom; and
(F) an addition reaction controlling agent at an effective amount.

The thermal conductive millable-type silicone rubber composition of the present invention as above can yield a heat-dissipating sheet having excellent thermal conductivity, strength, and insurability, having appropriate hardness, and having reduced contact thermal resistance and excellent long-term stability.

In this case, a proportion of particles contained in the component (C) and having a particle diameter of 45 μm or more is preferably 5 mass% or less.

With the thermal conductive millable-type silicone rubber composition as above, when the thermal conductive sheet is obtained by applying this composition, smoothness on the sheet surface is not impaired by projecting of the thermal conductive filler (the filling material) from the coating film surface, and the contact thermal resistance does not increase.

The above composition preferably further includes (D) a wetter component of a one-terminal trialkoxysilyl-group-modified polysiloxane represented by the following formula (1) in 5 to 100 parts by mass.

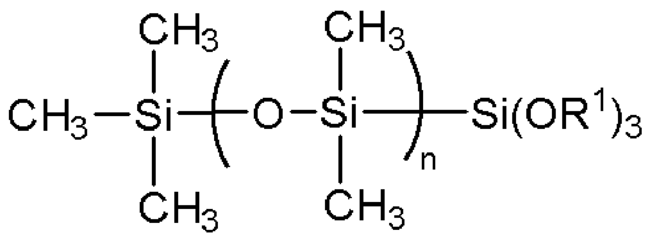

(1)

In the formula, $R^1$ represents an alkyl group having 1 to 6 carbon atoms, and "n" represents an integer of 5 to 100.

Blending the component (D) as above serves a hydrophobizing treatment of the component (C) during the composition preparation to increase wettability with the component (A), and the component (C) can be uniformly dispersed

in a matrix including the component (A).

In addition, the present invention provides a thermal conductive sheet including:

a cured product of the above thermal conductive millable-type silicone rubber composition; and
a mesh-shaped reinforcing material.

The thermal conductive sheet as above has excellent thermal conductivity, strength, and insurability, having appropriate hardness, and having reduced contact thermal resistance and excellent long-term stability.

In this case, the mesh-shaped reinforcing material is preferably filled.

The thermal conductive sheet as above provides good contact of an interface between the reinforcing material and the cured product of the thermal conductive millable-type silicone rubber composition, and can more reduce the contact thermal resistance.

## ADVANTAGEOUS EFFECTS OF INVENTION

As above, the thermal conductive millable-type silicone rubber composition of the present invention yields a thermal conductive sheet suitable for dissipating heat of the electronic devices, etc. In addition, the thermal conductive sheet containing the cured product of the millable-type silicone rubber composition and the mesh-shaped reinforcing material is a sheet having low thermal resistance due to good contact without sacrifice of the insulation assurance. Further, controlling the particle diameter of the thermal conductive material enables continuous coating formation, and consequently enables production at a low cost in a simple process and stable product properties in a long term.

## DESCRIPTION OF EMBODIMENTS

As noted above, there has been a demand for development of a thermal conductive sheet having small contact thermal resistance in addition to excellent heat-dissipating properties and insulation reliability.

The present inventors have earnestly studied the above problem, and consequently found that the above problem can be solved with a thermal conductive millable-type silicone rubber composition including the following components (A), (B) (C), (E), and (F), and a thermal conductive sheet using the composition. This finding has led to the completion of the present invention.

Specifically, the present invention is a thermal conductive millable-type silicone rubber composition including:

(A) a linear organopolysiloxane having an alkenyl group and including following components (A-1) to (A-3) in 100 parts by mass;

(A-1) a gum-like organopolysiloxane having alkenyl groups only at both terminals of a molecular chain,
(A-2) a gum-like organopolysiloxane having alkenyl groups at both terminals of a molecular chain and in a side chain, and
(A-3) an organopolysiloxane having two or more alkenyl groups in one molecule and being liquid at 25°C;

(B) an organohydrogenpolysiloxane including following components (B-1) and (B-2);

(B-1) an organohydrogenpolysiloxane having a hydrosilyl group only in a side chain of a molecular chain and having two to five hydrosilyl groups in one molecule, and
(B-2) an organohydrogenpolysiloxane having two or more hydrosilyl groups in one molecule, and having two of the hydrosilyl groups at a terminal of a molecular chain,

wherein the component (B) is contained at an amount such that a total amount of the hydrosilyl groups in the component (B) is 0.5 to 4.0 mol relative to 1 mol of a total amount of the alkenyl groups in the component (A),
(C) a thermal conductive filler in 150 to 2,400 parts by mass;
(E) an addition reaction catalyst at an amount of 0.01 to 1,000 ppm in terms of mass of platinum-group metal atom; and
(F) an addition reaction controlling agent at an effective amount.

Hereinafter, the present invention will be described in detail, but the present invention is not limited thereto.

### Thermal Conductive Millable-Type Silicone Rubber Composition

The thermal conductive millable-type silicone rubber composition of the present invention (hereinafter, also

referred to as "the thermal conductive silicone rubber composition") contains (A) an organopolysiloxane having an alkenyl group, (B) an organohydrogenpolysiloxane, (C) a thermal conductive filler, (E) an addition reaction catalyst, and (F) an addition reaction controlling agent. The thermal conductive silicone rubber composition may further contain additives such as (D) a wetter as necessary.

Hereinafter, the components contained in the composition of the present invention will be described.

(A) Organopolysiloxane Having Alkenyl Groups

The linear organopolysiloxane having an alkenyl group of the component (A) is a base polymer of the composition of the present invention. The component (A) is characterized by containing three of the following (A-1) to (A-3):

(A-1) a gum-like organopolysiloxane having alkenyl groups only at both terminals of a molecular chain; (A-2) a gum-like organopolysiloxane having alkenyl groups at both terminals of a molecular chain and in a side chain; and (A-3) an organopolysiloxane having two or more alkenyl groups in one molecule and being liquid at 25°C.

These three types of alkenyl group-containing organopolysiloxanes have all linear structures of diorganopolysiloxanes in which the main chain portion is made up of repeating diorganosiloxane units.

The alkenyl group in these three types of the organopolysiloxane is preferably an alkenyl group having 2 to 8 carbon atoms, and examples thereof include a vinyl group, an allyl group, a propenyl group, an isopropenyl group, a butenyl group, a hexenyl group, and a cyclohexenyl group. Among these, a vinyl group and an allyl group are preferable, and a vinyl group is particularly preferable.

A functional group other than the alkenyl group bonded to a silicon atom in these three types of the organopolysiloxane is preferably a monovalent hydrocarbon group selected from the group consisting of an alkyl group having 1 to 10, preferably 1 to 6, carbon atoms, an aryl group having 6 to 10 carbon atoms, and an aralkyl group having 7 to 10 carbon atoms. Examples thereof include: alkyl groups such as a methyl group, an ethyl group, a propyl group, an isopropyl group, a butyl group, an isobutyl group, a tert-butyl group, a pentyl group, a neopentyl group, a hexyl group, a heptyl group, and an octyl group; cycloalkyl groups such as a cyclopentyl group, a cyclohexyl group, and a cycloheptyl group; aryl groups such as a phenyl group, a tolyl group, a xylyl group, and a naphthyl group; and aralkyl groups such as a benzyl group, a phenylethyl group, and a phenylpropyl group. The functional groups other than the alkenyl group bonded to the silicon atom are not limited to be all the same.

Specific examples of the organopolysiloxane having an alkenyl group include organosiloxane copolymers such as dimethylsiloxane-methylvinylsiloxane copolymer blocked at both terminals of the molecular chain with trimethylsiloxy groups, methylvinylpolysiloxane blocked at both terminals of the molecular chain with trimethylsiloxy groups, dimethylsiloxane-methylvinylsiloxane-methylphenylsiloxane copolymer blocked at both terminals of the molecular chain with trimethylsiloxy groups, dimethylpolysiloxane blocked at both terminals of the molecular chain with dimethylvinylsiloxy groups, methylvinylpolysiloxane blocked at both terminals of the molecular chain with dimethylvinylsiloxy groups, dimethylsiloxane-methylvinylsiloxane copolymer blocked at both terminals of the molecular chain with dimethylvinylsiloxy groups, dimethylsiloxane-methylvinylsiloxane-methylphenylsiloxane copolymer blocked at both terminals of the molecular chain with dimethylvinylsiloxy groups, dimethylpolysiloxane blocked at both terminals of the molecular chain with divinylmethylsiloxy groups, dimethylsiloxane-methylvinylsiloxane copolymer blocked at both terminals of the molecular chain with divinylmethylsiloxy groups, dimethylpolysiloxane blocked at both terminals of the molecular chain with trivinylsiloxy groups, and dimethylsiloxane-methylvinylsiloxane copolymer blocked at both terminals of the molecular chain with trivinylsiloxy groups.

<u>(A-1) Gum-Like Organopolysiloxane Having Alkenyl Groups only at Both Terminals of Molecular Chain</u>

The component (A-1) is a gum-like organopolysiloxane having alkenyl groups only at both terminals of a molecular chain.

In the present invention, the "gum-like" means an extremely viscous liquid with 200,000 mPa·s or more at a room temperature (25°C) or a non-liquid without self-flowability (a paste or a solid). The viscosity in the present invention refers to a value measured by a method described in JIS Z8803:2011 with a rotary viscosimeter.

A polymerization degree of the component (A-1) is preferably 2,000 to 20,000, and more preferably 3,000 to 15,000. The polymerization degree in the present invention refers to a value calculated and determined from a weight-average polymerization degree in terms of polystyrene, measured typically by gel permeation chromatography (GPC) analysis with toluene as a development solvent.

- Measurement Condition -

Development solvent: Toluene
Flow rate: 1 mL/min
Detector: Differential refractive index detector (RI)
Column: KF-805L × 2 (Shodex brand)
Column temperature: 25°C
Amount of sample injection: 30 μL (a toluene solution at a concentration of 0.2 mass%)

(A-2) Gum-Like Organopolysiloxane Having Alkenyl Groups at Both Terminals of Molecular Chain and in Side Chain

The component (A-2) is a gum-like organopolysiloxane having alkenyl groups at both terminals of a molecular chain and in a side chain.

A polymerization degree of the component (A-2) is preferably 2,000 to 20,000, and more preferably 3,000 to 15,000. A number of the alkenyl groups in the side chain in one molecule is preferably 1 to 200, and more preferably 2 to 100.

(A-3) Organopolysiloxane Having Two or More Alkenyl Groups in One Molecule and Being Liquid at 25°C

The component (A-3) is an organopolysiloxane having two or more alkenyl groups in one molecule and being liquid at 25°C. The liquid in the present invention refers to having self-flowability at 25°C.

A polymerization degree of the component (A-3) is preferably 100 to 2,000, and more preferably 500 to 1,500. A number of the alkenyl groups in one molecule is characterized by being two or more, preferably two to ten, and more preferably two to five. The alkenyl group may be present either or both at a terminal and in a side chain of the molecular chain, but the component (A-3) preferably has the alkenyl groups only at the 5terminals of the molecular chain.

The structure of the component (A-3) is linear structure having repetition of diorganosiloxane units in the main chain portion.

The component (A-3) is characterized by being liquid at 25°C. The viscosity is preferably 500 to 200,000 mPa·s, and more preferably 10,000 to 150,000 mPa·s.

A ratio between the blending amounts of (A-1) to (A-3) is preferably 20 to 45 mass% of the component (A-1), 20 to 45 mass% of the component (A-2), and 10 to 40 mass% of the component (A-3) in a total amount of the component (A) being 100 mass%.

(B) Organohydrogenpolysiloxane

The organohydrogenpolysiloxane of the component (B) reacts with the component (A) to act as a crosslinking agent.

The component (B) is characterized by using an organohydrogenpolysiloxane containing two of the following components (B-1) and (B-1):

(B-1) an organohydrogenpolysiloxane having a hydrosilyl group only in a side chain of a molecular chain and having two to five hydrosilyl groups in one molecule; and
(B-2) an organohydrogenpolysiloxane having two or more hydrosilyl groups in one molecule, and having two of the hydrosilyl groups at a terminal of a molecular chain.

A functional group other than the hydrosilyl group in the organohydrogenpolysiloxane of the component (B) is preferably a monovalent hydrocarbon group selected from the group consisting of an alkyl group having 1 to 10, preferably 1 to 6, carbon atoms, an aryl group having 6 to 10 carbon atoms, and an aralkyl group having 7 to 10 carbon atoms. Examples thereof include: alkyl groups such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups such as a phenyl group, a tolyl group, a xylyl group, and a naphthyl group; and aralkyl groups such as a benzyl group, a phenylethyl group, and a phenylpropyl group. Among these, the functional group is preferably an alkyl group or an aryl group, and more preferably a methyl group or a phenyl group, which is desirable in terms of flame retardancy. The functional groups other than the hydrogen atom bonded to the silicon atom (the hydrosilyl group) are not limited to be all the same.

(B-1) Organohydrogenpolysiloxane Having Hydrosilyl Group only in Side Chain of Molecular Chain and Having Two to Five Hydrosilyl Groups in One Molecule

The component (B-1) is an organohydrogenpolysiloxane having a hydrosilyl group only in a side chain of a molecular chain and having two to five, preferably two to four, hydrosilyl groups in one molecule. In the present invention, "having a hydrosilyl group in a side chain of a molecular chain" means having a Si-H bond in a D unit or T unit constituting the polysiloxane main chain or having a Si-H bond on the polysiloxane side chain.

The structure of the component (B-1) may be any of a linear or branched structure, but preferably a linear structure.

A polymerization degree of the component (B-1) is preferably 4 to 350, and more preferably 10 to 200.

Specific examples of the component (B-1) include an organohydrogenpolysiloxane (o = 27, p = 2) represented by the following formula.

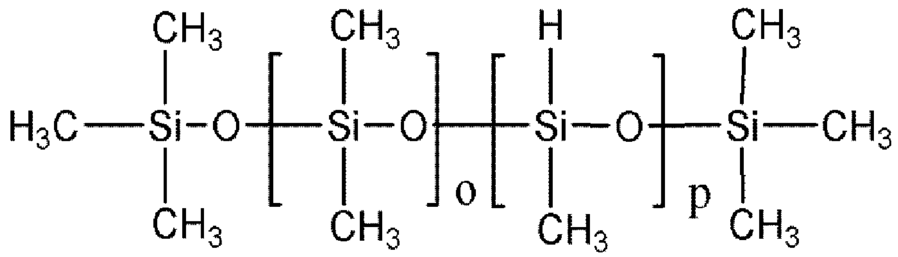

(B-2) Organohydrogenpolysiloxane Having Two or More Hydrosilyl Groups in One Molecule, and Having Two of Hydrosilyl Groups at Terminal of Molecular Chain

The component (B-2) is an organohydrogenpolysiloxane having 2 or more, preferably 2 to 50, more preferably 2 to 20, hydrosilyl groups in one molecule, and having two of the hydrosilyl groups at a terminal of a molecular chain. The hydrosilyl groups may be present at the terminal of the main chain (the longest polysiloxane chain) or at the terminal of the side chain. As above, the terminal of the molecular chain of the polysiloxane in the present invention means both of the terminal of the polysiloxane main chain and the terminal of the polysiloxane side chain, and "both terminals" simply referred to as means the two terminals of the polysiloxane main chain.

The structure of the component (B-2) may be any of a linear or branched structure, but preferably a linear structure.

A polymerization degree of the component (B-2) is preferably 4 to 200, and more preferably 10 to 100.

Specific examples of the component (B-2) include an organohydrogenpolysiloxane (q = 65, r = 1) represented by the following formula.

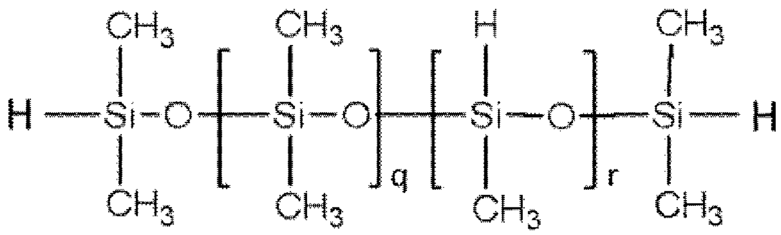

A content of the organohydrogenpolysiloxane of the component (B) is an amount such that a total amount of the hydrosilyl groups in the component (B) is 0.5 to 4.0 mol, preferably 0.6 to 3.0 mol, relative to 1 mol of the total amount of the alkenyl groups in the component (A). If the content of this component is less than 0.5 mol, the obtained thermal conductive silicone rubber may have strong tackiness, and may cause blocking in winding. In addition, a changing rate of the thickness becomes large in compressing to cause concern about deterioration of insulability. Meanwhile, if the content of this component is more than 4.0 mol and less than 6.0 mol, which is a slightly excess amount, this state shortens the pot-life of the obtained thermal conductive silicone rubber composition, and there is a risk of curing before a curing step. In addition, the obtained cured product becomes hard, and the contact resistance cannot be sufficiently reduced. Further, if the content of this component is more than 6.0 mol, which is a largely excessive amount, this state causes this component not contributing to the crosslinking reaction to act as a plasticizer to soften the cured product, and the changing rate of the thickness becomes large to deteriorate the insulability.

A ratio between the blending amounts of (B-1) and (B-2) is preferably 30 to 95 mass% of the component (B-1) and

5 to 70 mass% of the component (B-2) in a total amount of the component (B) being 100 mass%.

As above, use in combination of three types of the component (A) and two types of the component (B) of the present invention can strictly control the crosslinking structure (chain-length extension and crosslinking density) of the polysiloxane while retaining the good handling properties of the gum-like organopolysiloxane in the component (A).

(C) Thermal Conductive Filler

The component (C) is a thermal conductive filler to impart thermal conductivity to the thermal conductive silicone rubber composition. Examples of the thermal conductive filler preferably include inorganic powders such as aluminum oxide, zinc oxide, silicon oxide, silicon carbide, aluminum nitride, and boron nitride. The component (C) may be used singly or in combination of two or more thereof.

A blending amount of the component (C) needs to be 150 to 2,400 parts by mass, and preferably within a range of 200 to 2,300 parts by mass relative to 100 parts by mass of the component (A). If the blending amount is less than 150 parts by mass, the thermal conductivity tends to be insufficient. Meanwhile, if the blending amount is more than 2,400 parts by mass, it may be difficult to uniformly blend the component (C) into the composition, and forming processability may be deteriorated.

A particle size distribution of the component (C) is not particularly limited, but a proportion of particles contained therein and having a particle diameter of 45 μm or more is preferably 5 mass% or less, and more preferably 2 mass% or less. With the proportion of the particles having a particle diameter of 45 μm or more is 5 mass% or less, when the thermal conductive sheet is obtained by applying the thermal conductive millable-type silicone rubber composition, there is no risk of impairing smoothness on the sheet surface by projecting of the thermal conductive filler (the filling material) from the coating film surface, and there is no risk of increasing the contact thermal resistance.

In the component (C), a filler having a plurality of particle size distributions may be used as long as the proportion of the particles having a particle diameter of 45 μm or more is 5 mass% or less. For example, a filler having convex portions at 1 μm and 10 μm of particle diameters on a particle size distribution curve may be used, or a filler having an average particle diameter of 5 μm and a filler having an average particle diameter of 20 μm may be used in combination.

In the component (C), the average particle diameter is preferably 0.1 to 30 μm, and more preferably 0.1 to 10 μm. When the average particle diameter is 30 μm or less, when the thermal conductive sheet is obtained by applying the thermal conductive millable-type silicone rubber composition, there is no risk of impairing smoothness on the sheet surface by projecting of the thermal conductive filler from the coating film surface, and there is no risk of increasing the contact thermal resistance. The thermal conductive filler having an average particle diameter of 0.1 μm or more is easily obtained.

The average particle diameter may be typically determined as a cumulative volume average diameter $D_{50}$ (or a median diameter) in particle size distribution measurement with laser light diffraction, etc. Specifically, the average particle diameter is a value of a volume-based cumulative 50% particle diameter ($D_{50}$) measured with a particle size distribution measuring device MT3000II, available from MicrotracBEL Corp. A proportion of particles having a specific particle diameter (for example, a particle diameter of 45 μm) or more can be determined from the above particle size distribution measurement.

(D) Wetter

Into the thermal conductive silicone rubber composition of the present invention, a wetter of a component (D) is preferably blended. The component (D) is blended for a purpose of a hydrophobizing treatment of the component (C) in preparing the composition to improve wettability with the component (A) and allow the component (C) to be uniformly dispersed in the matrix including the component (A). The component (D) is particularly preferably a one-terminal trialkoxysilyl-group-modified polysiloxane represented by the following formula (1).

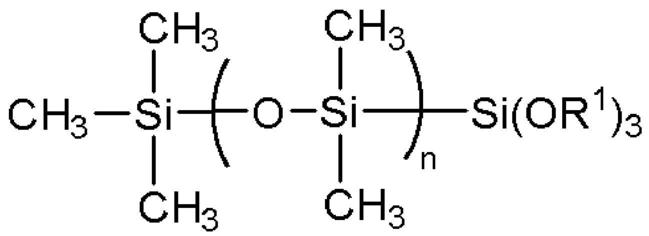

(1)

In the formula (1), $R^1$ represents an alkyl group having 1 to 6 carbon atoms, and preferably an alkyl group having 1 to 3 carbon atoms. "n" represents an integer of 5 to 100, and preferably 1 to 50.

A blending amount of the component (D), if blended, is 5 to 100 parts by mass, and particularly preferably 10 to 60 parts by mass relative to 100 parts by mass of the component (A). The proportion of this component within the above range causes no risk of inducing oil separation.

(E) Addition Reaction Catalyst

The addition reaction catalyst of the component (E) enhances the addition reaction between the alkenyl group bonded to the silicon atom in the component (A) and the hydrosilyl group in the component (B). This addition reaction catalyst is a platinum-group metal or a platinum-group metal compound. Examples thereof include: platinum-group metals such as platinum, palladium, and rhodium; chloroplatinic acid; alcohol-modified chloroplatinic acid; a coordination compound between chloroplatinic acid and olefins, vinylsiloxane, or an acetylene compound; and platinum-group metal compounds such as tetrakis(triphenylphosphine)palladium and chlorotris(triphenylphosphine)rhodium. Among these, the platinum-group metal compounds are preferable. In the present composition, a content of the component (E) is an amount of 0.01 to 1,000 ppm, and preferably an amount of 0.1 to 500 ppm relative to the component (A) in terms of mass of platinum-group metal atom. An excessively small content of this component may cause failure of the obtained thermal conductive silicone rubber composition to be sufficiently cured. Meanwhile, use of a large amount thereof does not increase the curing rate of the obtained silicone rubber composition, which may be economically disadvantageous.

(F) Addition Reaction Controlling Agent

The addition reaction controlling agent is not particularly limited as long as it is a compound having an action of inhibiting the curing reaction against the addition reaction catalyst of the above component (E), and conventionally known agents may be used. Specific examples thereof include: phosphorus-containing compounds such as triphenylphosphine; compounds having a nitrogen atom such as tributylamine, tetramethylethylenediamine, and benzotriazole; compounds having a sulfur atom; acetylenic compounds such as 1-ethynyl-1-cyclohexanol, 3-butyn-1-ol, 2-methyl-3-butyn-2-ol, and 3-methyl-1-tridecyn-3-ol; vinyl-group-containing siloxanes such as 1,3-divinyl-1,1,3,3-tetramethyldisiloxane and 1,3,5,7-tetramethyl-1,3,5,7-tetravinylcyclotetrasiloxane; hydroperoxide compounds; and maleic acid derivatives. A blending amount of the addition reaction controlling agent is preferably regulated to an optimal amount for each addition reaction controlling agent to be used because a degree of the action of inhibiting the curing reaction of the addition reaction controlling agent varies depending on its chemical structure. Blending the reaction inhibiting agent at the optimal amount allows the composition to have excellent long-term storage stability at room temperature and excellent curing properties. The blending amount of the component (F) is not particularly limited as above, and the component (F) may be blended at an amount of 50 to 150 times relative to 1 mol of the platinum-group metal atom included in the addition reaction catalyst of the component (E). For example, when the acetylenic compound such as 3-methyl-1-tridecyn-3-ol is used as the component (F), this compound is preferably blended at an amount within the above range.

Other Components

Into the thermal conductive silicone rubber composition of the present invention, other components may be further blended as necessary. For example, optional components such as: heat-resistance improvers such as iron oxide; viscosity regulators such as silica; coloring agents; and releasing agents may be blended.

Cured Product of Thermal Conductive Silicone Rubber Composition and Its Hardness

The above thermal conductive silicone rubber composition can be cured under a known condition. The curing condition is not particularly limited, and 80 to 150°C for about 30 seconds to 1 hour, for example.

A hardness of the cured product of the thermal conductive silicone rubber composition is 40 to 70, and more preferably 50 to 60 as a durometer-A hardness measured by a method described in JIS K 6253:2012. The hardness of 40 or more hardly causes deformation (thinning) of the cured product against pressure, and easily retains the insulation properties. The hardness of 70 or less provides sufficiently low contact thermal resistance, and can exhibit sufficient heat-dissipating properties.

Thermal Conductive Sheet

The thermal conductive sheet of the present invention includes: the cured product of the above thermal conductive millable-type silicone rubber composition; and a mesh-shaped reinforcing material.

The thermal conductive sheet as above includes the cured product formed by curing the thermal conductive millable-type silicone rubber composition of the present invention and the mesh-shaped reinforcing material, and

consequently has excellent thermal conductivity, strength, insulability, appropriate hardness, small contact thermal resistance, and excellent long-term stability.

Mesh-Shaped Reinforcing Material

The mesh-shaped reinforcing material used for reinforcing the present thermal conductive sheet is not particularly limited, and examples thereof include inorganic fibric such as glass cloth and ceramic cloth, organic fabric such as nylon and polyester, or a composite material thereof. For providing good contact of an interface between the reinforcing material and the cured product of the thermal conductive silicone rubber composition to lower the contact thermal resistance, the reinforcing material is preferably filled. The filling fills opened portions of the mesh-shaped reinforcing material to increase adhesive strength with the cured product of the thermal conductive silicone rubber composition, and fixes the mesh of the reinforcing material to more stabilize the shape.

The filling material is not particularly limited, and addition-reaction curable materials or peroxide curable materials may be used, for example. Among these, a thermal conductive silicone rubber material is the best. The thermal conductive silicone rubber material may have any curing type. The above thermal conductive millable-type silicone rubber composition may be used, or another material may be used. It is particularly preferable that the thermal conductive millable-type silicone rubber composition to yield the cured product to constitute the thermal conductive sheet be the same as the filling material because of more excellent thermal conductivity, strength, insurability, appropriate hardness, small contact thermal resistance, and improved productivity.

A thickness of this reinforcing material is, for example, 20 to 100 μm, and more preferably 30 to 80 μm. The thickness of the reinforcing material of 20 μm or more yields sufficient strength of the thermal conductive sheet. Meanwhile, the thickness of 100 μm or less yields sufficient thermal conductivity.

Contact Thermal Resistance

The contact thermal resistance of the thermal conductive sheet in the present invention to an adherend is preferably 40 $mm^2 \cdot K/W$ or less, and more preferably 5 to 35 $mm^2 \cdot K/W$ measured in accordance with ASTM D5470 under a condition of 50°C and 700 kPa. The contact thermal resistance of 40 $mm^2 \cdot K/W$ or less yields sufficient adhesion between the adherend and the thermal conductive sheet to yield good thermal conductivity efficiency. The contact thermal resistance of the thermal conductive sheet to the adherend can be determined by a method described in Example, described later.

Changing Rate of Thickness of Thermal Conductive Sheet

The thermal conductive sheet becomes thin and deteriorates the insulation performance as a pressure is applied. That is, a smaller changing rate of the thickness of the thermal conductive sheet is better in terms of retention of the insulation properties.

In the thermal conductive sheet of the present invention, a changing rate of the thickness is 20% or less, and more preferably 10% or less of an initial thickness. The changing rate is a rate of a thickness after 20 minutes from compression by applying a pressure of 700 kPa against the thermal conductive sheet relative to the initial thickness of the thermal conductive sheet. The changing rate of the thickness of 20% or less reduces a changing rate of the thickness under mounting at high pressure, and thus easily retains the insulation properties.

Production of Thermal Conductive Sheet

A method for producing the thermal conductive sheet of the present invention is not particularly limited. A pressing method, a coating method, etc. may be applied, and the coating method is typically effective.

In the production of the thermal conductive sheet by the coating method, the following steps (1) to (3) are performed, for example.

(1) Coating Composition Preparing Step:
The components (A) to (F), and the solvent, as well as the additives or the like, as necessary, are added and mixed. The obtained mixture is treated as necessary, and stirred and mixed to prepare a coating composition.
(2) Filling Step:
The coating composition obtained in the above step is applied on the reinforcing material as necessary, and heated as necessary to obtain a filled reinforcing material.
(3) Coating Step:
The thermal conductive silicone rubber composition is applied on the filled reinforcing material, and then heated to

laminate (to perform coating of) the cured product of the present composition.

<Preparation of Coating Composition>

First, the organopolysiloxane having an alkenyl group of the component (A), the thermal conductive filler of the component (C), and the wetter of the component (D) are kneaded by using a mixing machine such as a kneader, a Banbury mixer, a planetary mixer, and a Shinagawa mixer while heating at about 100°C or higher as necessary. In this kneading step, reinforcing silica such as fumed silica and precipitated silica, a flame retardant such as platinum, titanium oxide, and benzotriazole, etc. may be added and mixed, if desired.

The uniform mixture obtained in the kneading step is cooled to room temperature, and then filtered through a strainer, etc. Then, if desired, a coloring agent such as an organic pigment and an inorganic pigment, a heat resistance improver such as iron oxide and cerium oxide, an internal releasing agent, a catalyst, etc. may be added and mixed into the filtered mixture by using a double roller, a Shinagawa mixer, etc.

Into the composition obtained in this second kneading step, a curing agent, the acetylene compound-type addition reaction controlling agent such as 1-ethynyl-1-cyclohexanol (the component (F)), the catalyst (the component (E)), etc. are added. As the coating composition, a solvent such as toluene is further added and mixed with a stirring machine such as a planetary mixture and a kneader, and the crosslinking agent (the component (B)) is finally added and further mixed to prepare the coating composition.

<Filling of Reinforcing Material>

The coating composition obtained in the above step is applied on the above reinforcing material to be filled. The composition is continuously applied on the reinforcing material by successively using a coating apparatus, such as a knife coater and a kiss coater, equipped with a drying furnace, a heating furnace, and a winding apparatus. Subsequently, the solvent, etc. is dried and vaporized, and heated at 80 to 200°C, preferably about 100 to 150°C, in a case of the addition-reaction curable type, or at 100 to 200°C, preferably about 110 to 180°C, in a case of the peroxide curable type to obtain the filled reinforcing material.

<Coating>

On one side or both sides of the filled reinforcing material obtained in the above step, the coating composition to be the cured product of the thermal conductive silicone rubber composition is applied. The composition is continuously applied on one surface of the filled reinforcing material by successively using a coating apparatus, such as a knife coater and a kiss coater, equipped with a drying furnace, a heating furnace, and a winding apparatus, then the solvent, etc. is dried and vaporized, and heated at 80 to 200°C, preferably 100 to 150°C to laminate.

EXAMPLE

The present invention will be specifically described below with showing Examples and Comparative Examples, but the present invention is not limited to the following Examples. The average polymerization degree, the viscosity, the particle diameter, and the average particle diameter were measured by the aforementioned methods.

Materials used in Examples and Comparative Examples were as follows.

Component (A): Vinylpolysiloxane

(A-1) Gum-like organopolysiloxane composed of 7998 dimethylsiloxane units and 2 dimethylvinylsiloxane units in one molecule, and having an average polymerization degree of 8,000.

(A-2) Gum-like organopolysiloxane composed of 7960 dimethylsiloxane units, 38 methylvinylsiloxane units, and 2 dimethylvinylsiloxane units in one molecule, and having an average polymerization degree of 8,000.

(A-3) Organopolysiloxane composed of 1128 dimethylsiloxane units and 2 dimethylvinylsiloxane units in one molecule, and having an average polymerization degree of 1,130, being liquid at 25°C, and having a viscosity of 105,000 mPa·s.

Component (B): Hydrogenpolysiloxane

The following (B-1) and (B-2) were mixed so that the fraction was 3:1.
(B-1) Methylhydrogenpolysiloxane represented by the following formula.

Organohydrogenpolysiloxane to be a crosslinking agent and represented by the following formula ($o = 27$, $p = 2$).

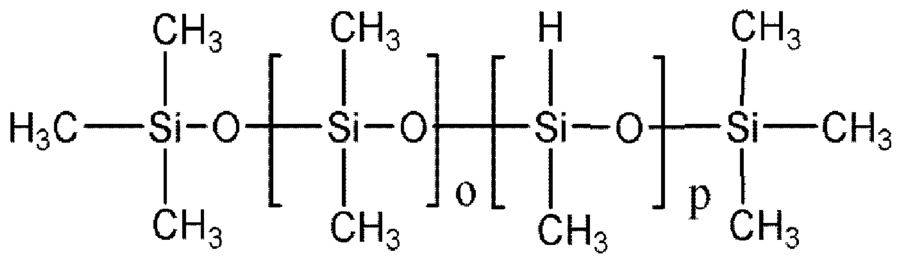

(B-2) Methylhydrogenpolysiloxane represented by the following structural formula.

Organohydrogenpolysiloxane to be a crosslinking agent and represented by the following formula (q = 65, r = 1).

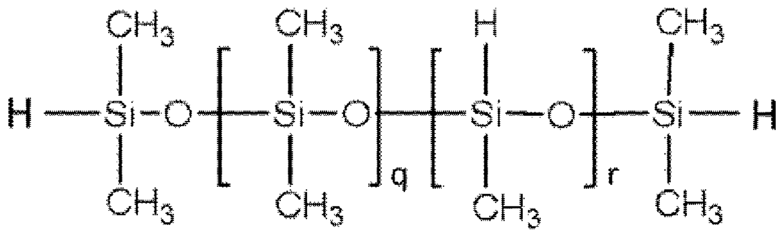

Component (C): Thermal Conductive Filler

(C-1) Irregular-shaped aluminum oxide having an average particle diameter of 1 μm in which an amount of particles having a particle diameter of 45 μm or more was 0.8 mass%.

(C-2) Spherical aluminum oxide having an average particle diameter of 1 μm in which an amount of particles having a particle diameter of 45 μm or more was 0.6 mass%.

(C-3) Spherical aluminum oxide having an average particle diameter of 10 μm in which an amount of particles having a particle diameter of 45 μm or more was 1.2 mass%.

(C-4) Boron nitride having an average particle diameter of 5 μm in which an amount of particles having a particle diameter of 45 μm or more was 0.9 mass%.

(C-5) Aluminum nitride having an average particle diameter of 1 μm in which an amount of particles having a particle diameter of 45 μm or more was 1.1 mass%.

(C-6) Spherical aluminum oxide having an average particle diameter of 10 μm in which an amount of particles having a particle diameter of 45 μm or more was 8.3 mass%.

Component (D): Wetter

Dimethylpolysiloxane represented by the following formula, having an average polymerization degree of 30, and blocked at one terminal with a trimethoxysilyl group.

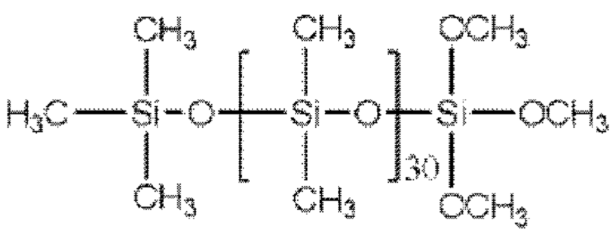

Component (E): Platinum-Group Metal Catalyst
5-mass% solution of chloroplatinic acid in 2-ethylhexanol
Component (F): Addition Reaction Controlling Agent 3-Methyl-1-tridecyn-3-ol
Component (G): Peroxide Curing Agent (for Comparative Examples)
Bis(4-methylbenzoyl) peroxide
Mesh-shaped reinforcing material: Glass cloth corresponding to IPC spec 1080 (thickness: 55 μm)

Examples 1 to 5 and Comparative Examples 1 to 5

Thermal conductive sheets of Examples 1 to 5 and Comparative Examples 1 to 5 were produced as follows.

Preparation of Thermal Conductive Silicone Rubber Composition

(Preparation Example 1)

Components in amounts (parts by mass) shown in Table 1 and Table 2 were fed into a Banbury mixer, and the mixture was kneaded for 20 minutes to prepare thermal conductive silicone rubber compositions (i) to (iv) and (vi) to (x).

Production of Thermal Conductive Sheet

(Production Example 1) Filling of Glass Cloth

The thermal conductive silicone rubber composition obtained in the above (Preparation Example 1) was used as a filling composition. Toluene was added at 20 mass% of an amount of the filling composition, and the mixture was kneaded by using a planetary mixer to prepare a coating material. This coating material was applied on one surface of glass cloth by using a comma coater to fill the glass cloth. Thereafter, the glass cloth was dried under a condition of 80°C for 10 minutes, and further cured under a condition of 170°C for 15 minutes. The filled glass cloth had a thickness of 80 μm.

(Production Example 2) Coating of Filled Glass Cloth (Thermal Conductive Sheet Having Total Thickness of 0.2 mm)

Into the thermal conductive silicone rubber composition obtained in the above (Preparation Example 1), toluene was added at 20 mass% of an amount of the composition, and the mixture was kneaded by using a planetary mixer to obtain a coating material. This coating material was applied on one surface (front surface) of the filled glass cloth obtained above by using a comma coater so that a thickness after the curing was 0.06 mm, and the resultant was cured and wound. Then, the composition was similarly applied on the other surface (back surface), and the resultant was cured and wound to obtain a thermal conductive sheet having a total thickness of 0.2 mm. The used comma coater and applying and curing conditions were the same as in the filling step (Production Example 1).

(Production Example 3) Coating of Filled Glass Cloth (Thermal Conductive Sheet Having Total Thickness of 0.3 mm)

Into the thermal conductive silicone rubber composition obtained in the above (Preparation Example 1), toluene was added at 20 mass% of an amount of the composition, and the mixture was kneaded by using a planetary mixer to obtain a coating material. This coating material was applied on one surface (front surface) of the filled glass cloth obtained above by using a comma coater so that a thickness after the curing was 0.11 mm, and the resultant was cured and wound. Then, the composition was similarly applied on the other surface (back surface), and the resultant was cured and wound to obtain a thermal conductive sheet having a total thickness of 0.3 mm. The used comma coater and applying and curing conditions were the same as in the filling step (Production Example 1).

(Production Example 4) Coating of Filled Glass Cloth (Thermal Conductive Sheet Having Total Thickness of 0.45 mm)

Into the thermal conductive silicone rubber composition obtained in the above (Preparation Example 1), toluene was added at 20 mass% of an amount of the composition, and the mixture was kneaded by using a planetary mixer to obtain a coating material. This coating material was applied on one surface (front surface) of the filled glass cloth obtained above by using a comma coater so that a thickness after the curing was 0.185 mm, and the resultant was cured and wound. Then, the composition was similarly applied on the other surface (back surface), and the resultant was cured and wound to obtain a thermal conductive sheet having a total thickness of 0.45 mm. The used comma coater and applying and curing conditions were the same as in the filling step (Production Example 1).

Evaluation Methods of Properties

Properties of the thermal conductive sheet were measured by the following method. Table 1 and Table 2 show the measurement results.

General Properties

<Initial Thickness>

Measurement was performed by using Digimatic Thickness Gauge, available from Mitutoyo Corporation.

<Thermal Resistance and Contact Thermal Resistance, and Thickness under Pressurizing>

The thermal resistance of the thermal conductive sheet was measured in the following procedure in accordance with ASTM D 5470.

Thermal conductive sheets with 0.2 mm, 0.3 mm, and 0.45 mm in thickness were respectively prepared, pressurized at 50°C and 700 kPa, and the thermal resistance of the thermal conductive sheet with each thickness was measured. The thicknesses (mm) of the thermal conductive sheets under pressurizing (700 kPa or lower) were plotted on a horizontal axis, and the thermal resistances were plotted on a vertical axis. From an intercept of the plotted graph, the contact thermal resistance was determined.

<Changing Rate of Thickness>

The thickness of the thermal conductive sheet under pressurizing was measured by the same method as in the measurement of the thermal resistance. Further, a changing rate of the thickness was determined with the following calculation formula.

$$\left(1 - \frac{\text{Thickness (mm) with pressurized at 700 kPa}}{\text{Initial thickness (mm)}}\right) \times 100\ (\%)$$

<Hardness of Cured Product of Thermal Conductive Silicone Rubber Composition>

A sample for measuring a hardness was separately produced by using each cured product, and the hardness was measured in accordance with JIS K 6253:2012 with a type-A durometer hardness meter (measurement temperature: 25°C).

Hereinafter, the glass cloth was filled in accordance with (Production Example 1) by using the thermal conductive silicone rubber composition obtained in (Preparation Example 1) as the filling composition, and the coating of the filled glass cloth was performed according to (Production Example 2) to (Production Example 4) to produce thermal conductive sheets of Examples 1 to 5 and Comparative Examples 1 to 5.

<Example 1>

The glass cloth was filled by using the composition (i), and then the coating of the filled glass cloth was performed by using the composition (i) to obtain the thermal conductive sheet.

<Example 2>

The glass cloth was filled by using the composition (ii), and then the coating of the filled glass cloth was performed by using the composition (ii) to obtain the thermal conductive sheet.

<Example 3>

The glass cloth was filled by using the composition (iii), and then the coating of the filled glass cloth was performed by using the composition (iii) to obtain the thermal conductive sheet.

<Example 4>

The glass cloth was filled by using the composition (iv), and then the coating of the filled glass cloth was performed by using the composition (iv) to obtain the thermal conductive sheet.

<Example 5>

The glass cloth was filled by using the composition (vi), and then the coating of the filled glass cloth was performed by using the composition (i) to obtain the thermal conductive sheet.

<Comparative Example 1>

The glass cloth was filled by using the composition (vi), and then the coating of the filled glass cloth was performed by using the composition (vi) to obtain the thermal conductive sheet.

<Comparative Example 2>

The glass cloth was filled by using the composition (vii), and then the coating of the filled glass cloth was performed by using the composition (vii) to obtain the thermal conductive sheet. The obtained sheet had extremely low hardness and exhibited strong adhesion, and thereby the thermal resistance and thickness were failed to be accurately measured.

<Comparative Example 3>

The glass cloth was filled by using the composition (viii), and then the coating of the filled glass cloth was performed by using the composition (viii) to obtain the thermal conductive sheet. However, an aggregate of the filler was observed on the sheet surface, and the thermal resistance and thickness were failed to be accurately measured.

<Comparative Example 4>

The composition (ix) had an excessively large blending amount of the thermal conductive filler to fail to obtain a uniform composition.

<Comparative Example 5>

The glass cloth was filled by using the composition (x), and then the coating of the filled glass cloth was performed by using the composition (x) to obtain the thermal conductive sheet. The obtained sheet exhibited a large change in the thickness under pressurizing, and deterioration of the insulation properties was concerned.

[Table 1]

| | | (i) | (ii) | (iii) | (iv) |
|---|---|---|---|---|---|
| Vinylpolysiloxane | A-1 | 23 | 23 | 23 | 40 |
| | A-2 | 44 | 44 | 44 | 31 |
| | A-3 | 33 | 33 | 33 | 29 |
| | Component A (A1+A2+A3) | 100 | 100 | 100 | 100 |
| Hydrogenpolysiloxane | B-1 | 3.8 | 2.8 | 1.8 | 3.0 |
| | B-2 | 1.3 | 2.3 | 3.3 | 1.0 |
| | Component B (B1+B2) | 5 | 5 | 5 | 4 |
| | H/Vi | 0.96 | 0.93 | 0.90 | 0.99 |
| Wetter | D | 44 | 44 | 44 | |

(continued)

| | | (i) | (ii) | (iii) | (iv) |
|---|---|---|---|---|---|
| Thermal conductive filler | C-1 | 280 | | | |
| | C-2 | 280 | | | 253 |
| | C-3 | 1700 | | 1678 | 773 |
| | C-4 | | 150 | | |
| | C-5 | | | 548 | |
| | C-6 | | | | |
| | Component C (C1+C2+C3+C4+C5+C6) | 2260 | 150 | 2226 | 1026 |
| Platinum-group metal catalyst | E | 0.5 | 0.4 | 0.4 | 0.2 |
| Addition reaction controlling agent | F | 0.3 | 0.2 | 0.2 | 0.1 |
| Contact thermal resistance (mm2·K/W) | | 27 | 19 | 20 | 38 |
| Changing rate of thickness (%) | | 4.2 | 6.6 | 8.2 | 9.2 |
| Durometer hardness | | 56 | 42 | 51 | 65 |

[Table 2]

| | | (vi) | (vii) | (viii) | (ix) | (x) |
|---|---|---|---|---|---|---|
| Vinylpolysiloxane | A-1 | 23 | 51 | 23 | 29 | 22 |
| | A-2 | 44 | 0 | 44 | 29 | 45 |
| | A-3 | 33 | 49 | 33 | 42 | 33 |
| | Component A (A1+A2+A3) | 100 | 100 | 100 | 100 | 100 |
| Hydrogenpolysiloxane | B-1 | | 1.5 | 3.8 | 3.0 | 44.3 |
| | B-2 | | 0.5 | 1.3 | 1.0 | 14.8 |
| | Component B (B1+B2) Component B | | 2 | 5 | 4 | 59 |
| | (B1+B2) H/Vi | | 1.05 | 0.96 | 0.94 | 10.93 |
| Wetter | D | 49 | 24 | 44 | 87 | 45 |
| Thermal conductive filler | C-1 | 280 | | 350 | | 282 |
| | C-2 | 280 | | 350 | 717 | 282 |
| | C-3 | 1700 | 1250 | | 2588 | 1708 |
| | C-4 | | | | | |
| | C-5 | | 417 | | | |
| | C-6 | | | 1800 | | |
| | Component C (C1+C2+C3+C4+C5+C6) | 2260 | 1667 | 2500 | 3305 | 2272 |
| Platinum-group metal catalyst | E | | 0.4 | 0.5 | 0.7 | 0.7 |
| Addition reaction controlling agent | F | | 0.2 | 0.3 | 0.4 | 0.3 |
| Peroxide curing agent | G | 16 | | | | |
| Contact thermal resistance (mm2·K/W) | | 75 | Unmeasurable | Unmeasurable | Unmeasurable | 15 |
| Changing rate of thickness (%) | | 2.2 | Unmeasurable | Unmeasurable | Unmeasurable | 25 |
| Durometer hardness | | 96 | 2 | 49 | Unmeasurable | 16 |

The thermal conductive sheets of Examples 1 to 5, which use the thermal conductive millable-type silicone rubber composition of the present invention, have small contact thermal resistance, excellent thermal conductivity, and appropriate hardness as shown in Table 1. In addition, the thermal conductive sheets are constituted with the mesh-shaped reinforcing material rich in flexibility, and thereby the thermal conductive sheets have excellent strength and reduced deterioration of the insulation properties due to the small change in the thickness under pressurizing (namely, excellent insurability). The thermal conductive millable-type silicone rubber composition of the present invention contains an effective amount of the addition reaction controlling agent (F), and thereby has excellent long-term stability. Moreover, since the present invention is not a laminated body of metal thin films such as metal foil, and thereby the present invention has no problems such as increase in the contact thermal resistance, concern about insulation failure, and increase in the production cost. Further, appropriately regulating the particle diameter of the thermal conductive filler (C) achieves the continuous coating formation, and consequently enables the production at a low cost in the simple process, and the product properties become stable in a long term.

From the above results, all the products of the present invention have small contact thermal resistance, excellent flexibility, and reduced deterioration of the insulation properties under pressurizing, and can be produced at a low cost in the simple process. In contrast, the products of Comparative Examples, which do not meet the requirements of the present invention, are found to have problems of large contact thermal resistance or shortage of material strength. That is, Comparative Example 1, where the thermal conductive sheet was obtained by using the peroxide curable composition (vi) to fill the glass cloth and perform the coating, caused considerably large contact thermal resistance. Comparative Example 2, where filling the glass cloth and coating were performed by using the composition (vii) containing no component (A-2), and Comparative Example 3, where filling the glass cloth and coating were performed by using the composition (viii) containing the excessively large amount of the component (C), yielded the thermal conductive sheet but the contact thermal resistance and the thickness were failed to be accurately measured. The composition (ix) containing the excessively large blending amount of the thermal conductive filler failed to yield a uniform composition initially. In Comparative Example 5, where filling the glass cloth and coating were performed by using the composition (x) containing the excess blending amount of the component (B), the component (B) not contributing to the crosslinking reaction acted as a plasticizer, resulted in the obtained thermal conductive sheet having a large change in the thickness under pressurizing and concerning about deterioration of the insulation properties.

The present description includes the following embodiments.

[1]: A thermal conductive millable-type silicone rubber composition, comprising:

(A) a linear organopolysiloxane having an alkenyl group and comprising following components (A-1) to (A-3) in 100 parts by mass;

(A-1) a gum-like organopolysiloxane having alkenyl groups only at both terminals of a molecular chain,
(A-2) a gum-like organopolysiloxane having alkenyl groups at both terminals of a molecular chain and in a side chain, and
(A-3) an organopolysiloxane having two or more alkenyl groups in one molecule and being liquid at 25°C;

(B) an organohydrogenpolysiloxane comprising following components (B-1) and (B-2);

(B-1) an organohydrogenpolysiloxane having a hydrosilyl group only in a side chain of a molecular chain and having two to five hydrosilyl groups in one molecule, and
(B-2) an organohydrogenpolysiloxane having two or more hydrosilyl groups in one molecule, and having two of the hydrosilyl groups at a terminal of a molecular chain,

wherein the component (B) is contained at an amount such that a total amount of the hydrosilyl groups in the component (B) is 0.5 to 4.0 mol relative to 1 mol of a total amount of the alkenyl groups in the component (A),
(C) a thermal conductive filler in 150 to 2,400 parts by mass;
(E) an addition reaction catalyst at an amount of 0.01 to 1,000 ppm in terms of mass of platinum-group metal atom; and
(F) an addition reaction controlling agent at an effective amount.

[2]: The thermal conductive millable-type silicone rubber composition of [1], wherein a proportion of particles contained in the component (C) and having a particle diameter of 45 μm or more is 5 mass% or less.
[3]: The thermal conductive millable-type silicone rubber composition of [1] or [2], further comprising (D) a wetter component of a one-terminal trialkoxysilyl-group-modified polysiloxane represented by the following formula (1) in 5 to 100 parts by mass,

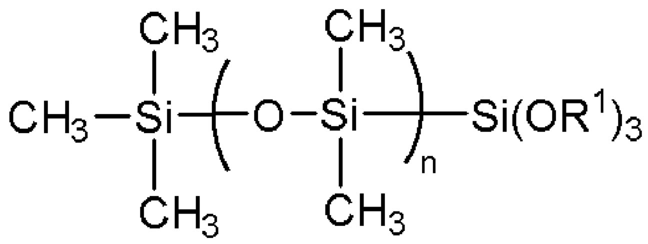

(1)

wherein $R^1$ represents an alkyl group having 1 to 6 carbon atoms, and "n" represents an integer of 5 to 100.

[4]: A thermal conductive sheet, comprising:

a cured product of the thermal conductive millable-type silicone rubber composition of any one of [1] to [3]; and a mesh-shaped reinforcing material.

[5]: The thermal conductive sheet of [4], wherein the mesh-shaped reinforcing material is filled.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

**1.** A thermal conductive millable-type silicone rubber composition, comprising:

(A) a linear organopolysiloxane having an alkenyl group and comprising following components (A-1) to (A-3) in 100 parts by mass;

(A-1) a gum-like organopolysiloxane having alkenyl groups only at both terminals of a molecular chain,
(A-2) a gum-like organopolysiloxane having alkenyl groups at both terminals of a molecular chain and in a side chain, and
(A-3) an organopolysiloxane having two or more alkenyl groups in one molecule and being liquid at 25°C;

(B) an organohydrogenpolysiloxane comprising following components (B-1) and (B-2);

(B-1) an organohydrogenpolysiloxane having a hydrosilyl group only in a side chain of a molecular chain and having two to five hydrosilyl groups in one molecule, and
(B-2) an organohydrogenpolysiloxane having two or more hydrosilyl groups in one molecule, and having two of the hydrosilyl groups at a terminal of a molecular chain,

wherein the component (B) is contained at an amount such that a total amount of the hydrosilyl groups in the component (B) is 0.5 to 4.0 mol relative to 1 mol of a total amount of the alkenyl groups in the component (A),
(C) a thermal conductive filler in 150 to 2,400 parts by mass;
(E) an addition reaction catalyst at an amount of 0.01 to 1,000 ppm in terms of mass of platinum-group metal atom; and
(F) an addition reaction controlling agent at an effective amount.

**2.** The thermal conductive millable-type silicone rubber composition according to claim 1, wherein a proportion of particles contained in the component (C) and having a particle diameter of 45 μm or more is 5 mass% or less.

**3.** The thermal conductive millable-type silicone rubber composition according to claim 1, further comprising (D) a wetter component of a one-terminal trialkoxysilyl-group-modified polysiloxane represented by the following formula (1) in 5 to 100 parts by mass,

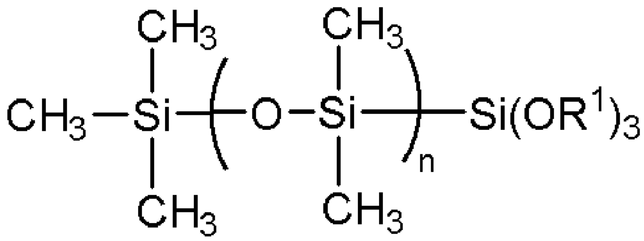

(1)

wherein $R^1$ represents an alkyl group having 1 to 6 carbon atoms, and "n" represents an integer of 5 to 100.

**4.** A thermal conductive sheet, comprising:

a cured product of the thermal conductive millable-type silicone rubber composition according to claim 1; and a mesh-shaped reinforcing material.

**5.** The thermal conductive sheet according to claim 4, wherein the mesh-shaped reinforcing material is filled.

**INTERNATIONAL SEARCH REPORT**

International application No.
**PCT/JP2023/030853**

**A. CLASSIFICATION OF SUBJECT MATTER**

***C08L 83/07***(2006.01)i; ***C08K 3/013***(2018.01)i; ***C08L 83/05***(2006.01)i
FI: C08L83/07; C08L83/05; C08K3/013

According to International Patent Classification (IPC) or to both national classification and IPC

**B. FIELDS SEARCHED**

Minimum documentation searched (classification system followed by classification symbols)

C08L83/07; C08K3/013; C08L83/05

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-38352 A (SHIN ETSU CHEM. CO., LTD.) 11 March 2021 (2021-03-11) | 1-5 |
| A | JP 2020-33447 A (SHIN ETSU CHEM. CO., LTD.) 05 March 2020 (2020-03-05) | 1-5 |
| A | JP 2010-100691 A (SHIN ETSU CHEM. CO., LTD.) 06 May 2010 (2010-05-06) | 1-5 |
| A | JP 2006-225422 A (SHIN ETSU CHEM. CO., LTD.) 31 August 2006 (2006-08-31) | 1-5 |
| A | JP 2016-60856 A (SHIN ETSU CHEM. CO., LTD.) 25 April 2016 (2016-04-25) | 1-5 |
| A | WO 2018/193705 A1 (SHIN ETSU CHEM. CO., LTD.) 25 October 2018 (2018-10-25) | 1-5 |
| A | JP 2019-48399 A (SHIN ETSU POLYMER CO., LTD.) 28 March 2019 (2019-03-28) | 1-5 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 October 2023** | **31 October 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/030853**

| Patent document cited in search report | Publication date (day/month/year) | Patent family member(s) | Publication date (day/month/year) |
|---|---|---|---|
| JP 2021-38352 A | 11 March 2021 | (Family: none) | |
| JP 2020-33447 A | 05 March 2020 | (Family: none) | |
| JP 2010-100691 A | 06 May 2010 | (Family: none) | |
| JP 2006-225422 A | 31 August 2006 | KR 10-2006-0092088 A<br>CN 1821309 A<br>TW 200639217 A | |
| JP 2016-60856 A | 25 April 2016 | (Family: none) | |
| WO 2018/193705 A1 | 25 October 2018 | JP 2021-113326 A<br>US 2020/0157308 A1<br>EP 3613808 A1<br>CN 110520481 A | |
| JP 2019-48399 A | 28 March 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015233104 A
- JP 2014193598 A
- JP 2013095023 A
- JP 2017092322 A